# EUROPÄISCHE PATENTSCHRIFT

(11) **EP 2 209 977 B1**
(45) Veröffentlichungstag und Bekanntmachung des Hinweises auf die Patenterteilung: **07.09.2016**
(21) Anmeldenummer: 08849024.8
(22) Anmeldetag: 10.10.2008
(51) Int. Cl.: F02D 19/00, F02D 19/08, F02D 41/00, F02M 37/00

(54) **BRENNKRAFTMASCHINE, DIE MIT UNTERSCHIEDLICHEN TYPEN VON FLÜSSIGEM KRAFTSTOFF BETRIEBEN WERDEN KANN**
INTERNAL COMBUSTION ENGINE THAT CAN BE OPERATED WITH DIFFERENT TYPES OF LIQUID FUEL
MOTEUR À COMBUSTION INTERNE FONCTIONNANT AVEC DIFFÉRENTS TYPES DE CARBURANTS LIQUIDES

(30) Priorität: 12.11.2007 DE 102007000878
(43) Veröffentlichungstag der Anmeldung: 28.07.2010
(73) Patentinhaber: Robert Bosch GmbH, 70442 Stuttgart (DE)
(72) Erfinder: MIERSCH-WIEMERS, Oliver, 70180 Stuttgart (DE)
(86) Internationale Anmeldenummer: PCT/EP2008/063603
(87) Internationale Veröffentlichungsnummer: WO 2009/062795

(56) Entgegenhaltungen:
- DE-A1-102006 054 081
- US-A- 4 402 296
- US-A- 5 775 282
- US-A1- 2007 234 976
- US-B1- 7 178 503

## Beschreibung

### Stand der Technik

Die Erfindung betrifft eine Brennkraftmaschine, die mit unterschiedlichen Typen von flüssigen Kraftstoffen, umfassend insbesondere Ethanol, Methanol und Benzin, betrieben werden kann, nach dem Oberbegriff des Anspruchs 1, sowie ein Verfahren zum Betreiben einer solchen Brennkraftmaschine nach dem Oberbegriff des nebengeordneten Patentanspruchs.

Vom Markt her sind so genannte "Flex-Fuel-Einspritzsysteme" bekannt. Derartige Einspritzsysteme ermöglichen Fahrzeugen sowohl das Tanken von Ethanol, Methanol als auch von Benzin. Mit Hilfe von Sensoren oder Modellen wird die jeweilige Kranstoffzusammensetzung im Tank erkannt. Dementsprechend wird von einer Steuer- und Regeleinrichtung der Betrieb der Brennkraftmaschine, beispielsweise durch eine spezifische Einstellung des Zündzeitpunktes, des Einspritzzeitpunktes und der Einspritzmenge, angepasst. Bei Flex-Fuel-Einspritzsystemen wird also nur ein einziger Tank eingesetzt, in dem die Kraflstofftypen Ethanol, Methanol und Benzin allein oder in beliebigen Mischungsverhältnissen gespeichert sind. Wenn also hier und nachfolgend von unterschiedlichen Typen von flüssigen Kraftstoffen die Rede ist, sind damit sowohl unterschiedliche Kraftstoffe als auch unterschiedliche Kraftstoffgemische gemeint.

### Offenbarung der Erfindung

Aufgabe der vorliegenden Erfindung ist es, eine Brennkraftmaschine der eingangs genannten Art und ein Verfahren zu deren Betreiben bereitzustellen, so dass gegenüber bisherigen Brennkraftmaschine ein verbessertes Emissions- und Verbrauchsverhalten erzielt wird.

Diese Aufgabe wird durch eine Brennkraftmaschine mit den Merkmalen des Anspruchs 1 gelöst, und durch ein Verfahren mit den Merkmalen des nebengeordneten Patentanspruchs. Vorteilhafte Weiterbildungen sind darüber hinaus in Unteransprüchen angegeben. Für die Erfindung wichtige Merkmale finden sich ferner in der nachfolgenden Beschreibung und der Zeichnung, wobei diese Merkmale sowohl in Alleinstellung als auch in Kombination für die Erfindung wesentlich sein können, ohne dass hierauf explizit hingewiesen wird.

Unterschiedliche Typen von flüssigen Kraftstoffen unterscheiden sich unter anderem durch den Energiegehalt. Damit die Brennkraftmaschine ein bestimmtes Drehmoment leisten kann, muss daher beim einen Typ eines flüssigen Kraftstoffs pro Arbeitsspiel eine größere Menge in den Brennraum gelangen als bei einem anderen Typ eines flüssigen Kraftstoffs. Bei der erfindungsgemäßen Brennkraftmaschine wird die benötigte Kraftstofftnenge auf die zwei unterschiedlichen Wege, auf denen der flüssige Kraftstoff in den Brennraum der Brennkraftmaschine gelangen kann, so aufgeteilt, dass in der Summe der Gesamtbedarf der Brennkraftmaschine, um ein gewünschtes Drehmoment erzeugen zu können, optimal abgedeckt wird. Die Aufteilung auf die beiden Wege erfolgt dabei vorzugsweise so, dass die Emissionen und der Kraftstoffverbrauch optimal sind.

Dadurch, dass zwei unterschiedliche Wege zur Verfügung stehen, kann der zusätzlich benötigte Kraftstoff, beispielsweise beim Betrieb mit Methanol oder Ethanol, die einen vergleichsweise geringen Energiegehalt haben, problemlos zur Verfügung gestellt werden. Es muss daher keiner der beiden Wege für eine besonders hohe Maximalmenge ausgelegt werden, was dann wiederum die Genauigkeit der Zumessung von Kleinmengen negativ beeinflussen könnte. Gleiches gilt auch für die Förderrate einer entsprechenden Kraftstoffpumpe. Diese kann daher für den besonders kritischen Fall des Kaltstarts ausgelegt werden, so dass auch das Startverhalten der Brennkraftmaschine verbessert wird.

In einer ersten Weiterbildung der erfindungsgemäßen Brennkraftmaschine wird vorgeschlagen, dass ein erster Weg, auf dem der flüssige Kraftstoffin den Brennraum gelangen kann, mindestens einen ersten Injektor umfasst, der den flüssigen Kraftstoffdirekt in den Brennraum einspritzt, und dass ein zweiter Weg, auf dem der flüssige Kraftstoffin den Brennraum gelangen kann, mindestens einen zweiten Injektor umfasst, der den flüssigen Kraftstoffin ein Saugrohr einspritzt. Bei dieser Weiterbildung wird also eine Direkteinspritzung mit einer Saugrohreinspritzung kombiniert. Damit sind die von der Direkteinspritzung bekannten Maßnahmen zur Emissionsoptimierung anwendbar, beispielsweise die Möglichkeit der Aufteilung der Einspritzung in verschiedene Teileinspritzungen (Vor-, Haupt- und Nacheinspritzung), der Einstellung der zeitlichen Lage des Einspritzbeginns und/oder Variation des Einspritzdrucks. Eine Saugrohreinspritzung bietet dagegen Vorteile bei Teillast und Hochlast bei kleinen Drehzahlen der Brennkraftmaschine und erweitert die Möglichkeiten zum Heizen eines Katalysators. Darüber hinaus kann eine zusätzliche Saugrohreinspritzung auch bei bestehenden Konzepten von Brennkraftmaschinen hinzugefügt werden, ohne dass komplexe und kostenintensive Änderungen an der Brennkraftmaschine erforderlich sind. Denkbar ist sogar, eine solche zusätzliche Saugrohreinspritzung beibereits bestehenden Brennkraftmaschinen nachzurüsten und diese so für Flex-Fuel verwendbar zu machen.

Es ist also dank der Erfindung weder erforderlich, die Hochdruckpumpe des Systems der Direkteinspritzung zu vergrößern, noch müssen die Injektoren, die den Kraftstoffdirekt in den Brennraum einspritzen, für einen erhöhten Durchfluss ausgelegt werden (was negative Auswirkungen auf die Kleinmengenzumessung haben könnte und eine erhöhte Endstufenleistung für die Ansteuerung des Injektors erforderlich machen würde), noch ist ein vergrößerter Hochdruck-Kraftstoffspeicher ("Rail") erforderlich, der zu Problemen beim Druckaufbau, vor allem bei einem Hochdruckstart führen könnte. Die zusätzliche Saugrohreinspritzung kann realisiert werden, indem lediglich ein zweiter Niederdruckinjektor und ein entsprechender Kraftstoffzuteiler installiert werden. Alle weiteren für die Saugrohreinspritzung erforderlichen Komponenten sind bei einer Brennkraftmaschine mit Direkteinspritzung bereits vorhanden.

Dabei kann jedem zu einem Brennraum führenden Saugrohr jeweils mindestens ein zweiter Injektor zugeordnet sein. Dies würde einer zylinderindividuellen Einspritzung entsprechen, wie sie bei heute üblichen Saugrohreinspritzsystemen ("SRE") üblich ist. Damit ist ein besonders laufruhiger und emissionsarmer Betrieb der Brennkraftmaschine möglich. Der mindestens eine zweite Injektor kann jedoch auch einem Sammel-Saugrohr, welches einer Mehrzahl von Brennräumen zugeordnet ist, zugeordnet sein, was kostengünstig realisiert werden kann.

Der erste Weg (Direkteinspritzung in einen Brennraum) ist vorzugsweise vorwiegend für die Einspritzung von wenigstens im Wesentlichen reinem Benzin ausgelegt. Dies dürfte in der Praxis auch bei Flex-Fuel-Systemen der überwiegend genutzte Kraftstoffsein, was in den meisten Betriebssituationen der Brennkraftmaschine zu deren optimalem Betrieb beiträgt. Konsequenterweise wird dann jenes System, über welches der flüssige Kraftstoffin ein Saugrohr eingespritzt wird, vor allem auf den zusätzlichen Kraftstoffbedarf an Ethanol und Methanol und Gemische aus Benzin, Ethanol und Methanol ausgerichtet.

Vorteilhaft ist es ferner, wenn die Steuer- und Regeleinrichtung den Einsatz der unterschiedlichen Wege zusätzlich abhängig von mindestens einer weiteren Betriebsgröße der Brennkraftmaschine steuert beziehungsweise regelt. Damit werden die Vorteile des Vorhandenseins von zwei unterschiedlichen Wegen beispielsweise für unterschiedliche Betriebssituationen der Brennkraftmaschine nutzbar gemacht, wie die bereits oben erwähnte verbesserte Gemischaufbereitung im Teillast- und Hochlastbetrieb bei kleinen Drehzahlen der Brennkraftmaschine, sowie erweiterte Katalysator-Heizmaßnahmen.

### Kurze Beschreibung der Zeichnungen

Nachfolgend werden Aus führungs formen der Erfindung unter Bezugnahme auf die beiliegende Zeichnung näher erläutert. In der Zeichnung zeigen:
- Figur 1: eine schematische Darstellung einer ersten Ausführungsform einer Brennkraftmaschine;
- Figur 2: ein Flussdiagramm eines Verfahrens zum Betreiben der Brennkraftmaschine von Figur 1;
- Figur 3: eine vereinfachte schematische Darstellung einer zweiten Ausführungsform einer Brennkraftmaschine.

### Aus führungs formen der Erfindung

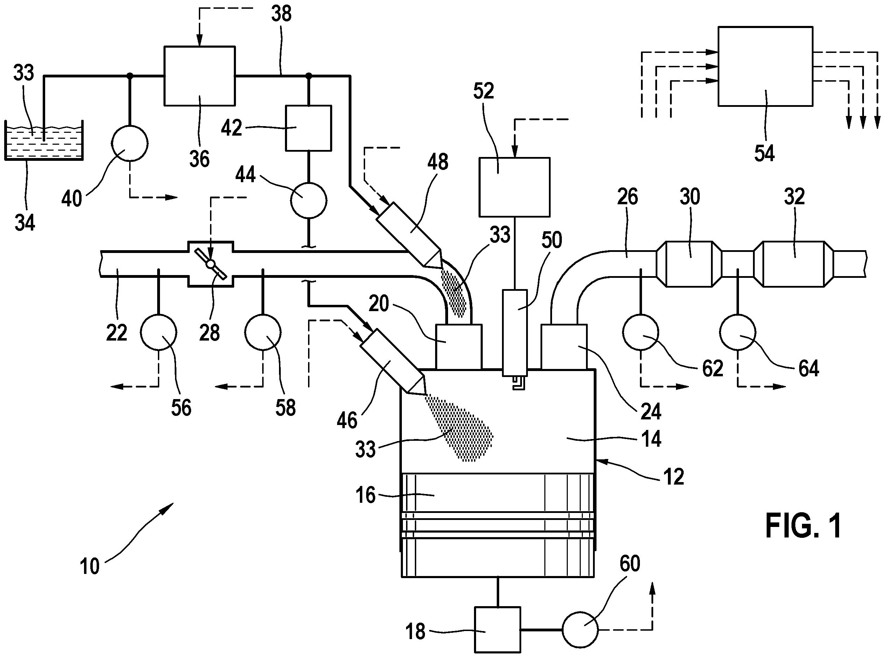

In Figur 1 trägt eine Brennkraftmaschine insgesamt das Bezugszeichen 10. Sie umfasst mehrere Zylinder, die im Wesentlichen identisch aufgebaut sind, von denen in Figur 1 jedoch beispielhaft nur einer gezeigt ist, der mit dem Bezugszeichen 12 bezeichnet ist. Der Zylinder 12 verfügt über einen Brennraum 14, der von einem Kolben 16 begrenzt wird. Dieser ist mit einer nur schematisch gezeichneten Kurbelwelle 18 verbunden.

Frischluft wird dem Brennraum 14 über ein Einlassventil 20 und ein Saugrohr 22 zugeführt, wohingegen Verbrennungsabgase über ein Auslassventil 24 und ein Abgasrohr 26 abgeführt werden. Im Saugrohr ist eine Drosselklappe 28 angeordnet, im Abgasrohr 26 ein Vorkatalysator 30 und ein Hauptkatalysator 32.

Die Brennkraftmaschine 10 wird mit unterschiedlichen Typen von flüssigen Kraftstoffen betrieben, beispielsweise Ethanol, Methanol, Benzin und beliebigen Gemischen aus diesen Komponenten. Der flüssige Kraftstoff 33 ist in einem Tank 34 bevorratet, aus dem ermittels einer Niederdruckpumpe 36 in eine Niederdruckleitung 38 gefördert wird. Der aktuelle Typ des flüssigen Kraftstoffs 33 wird von einem Sensor 40 erfasst. Bei einer nicht dargestellten Ausführungsform wird der aktuelle Typ über das Verhalten der Brennkraftmaschine anhand eines Modells ermittelt. An die Niederdruckleitung 38 ist zum einen eine Hochdruckpumpe 42 angeschlossen, die den Kraftstoff 33 in einen Druckspeicher 44 ("Rail") fördert. An diesen ist ein erster Injektor 46 angeschlossen, der den Kraftstoff 33 direkt in den Brennraum 14 einspritzen kann.

An die Niederdruckleitung 38 ist ferner direkt ein zweiter Injektor 48 angeschlossen, der den Kraftstoff 33 in das dem Brennraum 14 zugeordnete Saugrohr 22, unmittelbar vor dem Einlassventil 20 einspritzen kann. Der erste Injektor 46 gehört somit zu einem ersten Weg, auf dem der flüssige Kraftstoff 33 in den Brennraum 14 gelangen kann, und der zweite Injektor 48 gehört zu einem zweiten Weg, auf dem der Kraftstoff 33 in den Brennraum 14 gelangen kann. Der erste Weg entspricht jenem Prinzip, welches auch als "Benzindirekteinspritzung" bekannt ist, der zweite Weg jenem Prinzip, welches auch als "Saugrohreinspritzung" bekannt ist. Der in den Brennraum 14 eingespritzte Kraftstoff 33 wird von einer Zündkerze 50 entflammt, die mit einem Zündsystem 52 verbunden ist.

Der Betrieb der Brennkraftmaschine 10 wird von einer Steuer- und Regeleinrichtung 54 gesteuert und geregelt. Diese erhält Signale von verschiedenen Sensoren, so auch vom Sensor 40, der den Typ des flüssigen Kraftstoffes 33 erfasst beziehungsweise ermittelt. Ferner erhält sie Signale von einem HFM-Sensor 56, der die im Saugrohr 22 strömende Luftmasse erfasst, und von einem Drucksensor 58, der den im Saugrohr 22 stromabwärts von der Drosselklappe 28 herrschenden Druck erfasst. Ein Drehzahlsensor 60 übermittelt der Steuer- und Regeleinrichtung 54 ein der Drehzahl der Kurbelwelle 18 entsprechendes Signal, und zwei jeweils vor den Katalysatoren 30 und 32 angeordnete Lambda-Sensoren 62 und 64 übermitteln ebenfalls entsprechende Signale. Aus Darstellungsgründen nicht gezeigt sind ferner ein Temperatursensor und ein Klopfsensor am Zylinder 12 und ein Drucksensor am Rail 44.

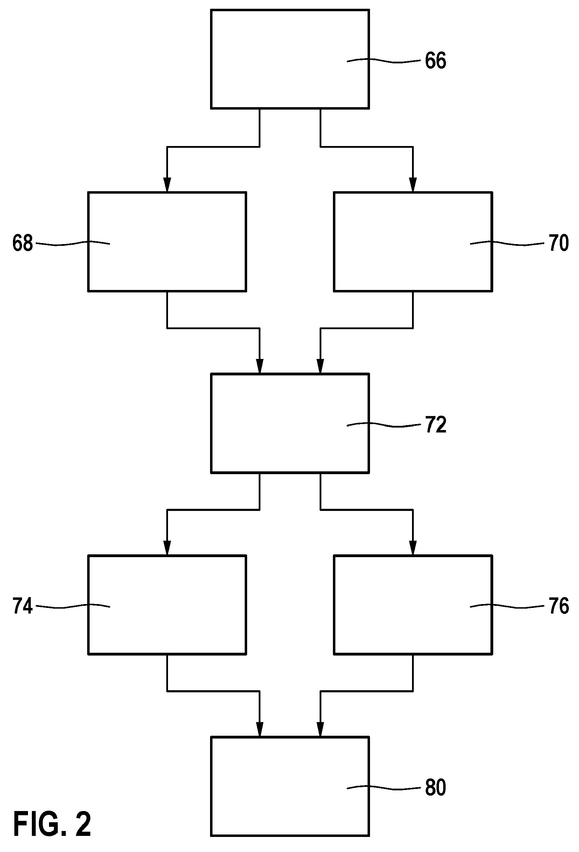

Die Brennkraftmaschine 10 wird folgendermaßen betrieben (vgl. Figur 2): Nach einem Start in 66 wird von der Steuer- und Regeleinrichtung 54 in 68 auf der Basis des Signals des Sensors 40 der aktuell verwendete Typ des flüssigen Kraftstoffs 33 ermittelt. Hierbei kann es sich um Benzin, Ethanol, Methanol oder beliebige Gemische aus diesen Substanzen handeln. Gleichzeitig wird in 70 die aktuelle Betriebssituation der Brennkraftmaschine 10 ermittelt beziehungsweise erfasst. Eine solche Betriebssituation kann beispielsweise ein Starten der Brennkraftmaschine 10 sein, oder sie kann einfach durch die gewünschte Last beziehungsweise das gewünschte Drehmoment und die aktuelle Drehzahl definiert sein. In 72 wird von der Steuer- und Regeleinrichtung 54 festgelegt, wie die für die aktuelle Betriebssituation erforderliche Kraftstoffmenge auf die beiden Injektoren 46 und 48 aufgeteilt werden soll. Diese Aufteilung, also der Einsatz der beiden Injektor 46 und 48, erfolgt also abhängig zum einen von dem ermittelten Typ des flüssigen Kraftstoffs 33 und zum anderen von der aktuellen Betriebssituation, die durch verschiedene aktuelle und gewünschte Betriebsgrößen der Brennkraftmaschine 10 definiert ist. Entsprechend der in 72 definierten Aufteilung werden in 74 und 76 die Injektoren 46 und 48 angesteuert. Das Verfahren endet in 80.

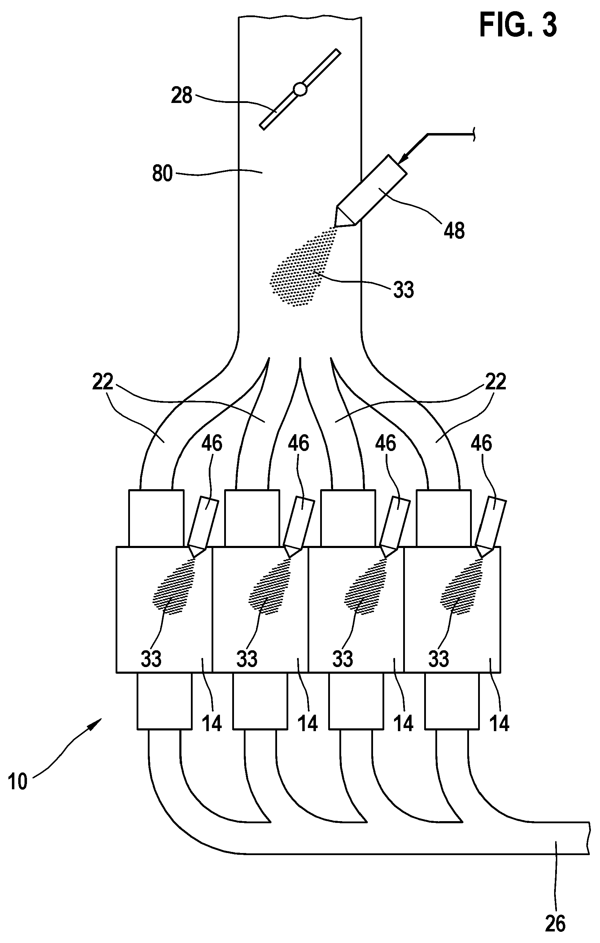

In Figur 3 ist ein Bereich einer alternativen Ausführungsform einer Brennkraftmaschine 10 dargestellt. Dabei gilt, dass solche Elemente und Bereiche, welche äquivalente Funktionen zu Elementen und Bereichen der in Figur 1 gezeigten Brennkraftmaschine 10 aufweisen, die gleichen Bezugszeichen tragen und nicht nochmals im Detail erläutert werden.

Die in Figur 3 dargestellte Brennkraftmaschine 10 unterscheidet sich von jener der Figur 1 dadurch, dass nicht jedes Saugrohr 22, welches einem Brennraum 14 zugeordnet ist, jeweils einen zweiten Injektor aufweist, sondern dass in einem stromaufwärts von den Saugrohren 22 vorhandenen Saugrohrsammler 80 ein einziger zweiter Injektor 48 angeordnet ist.

## Patentansprüche

1. Brennkraftmaschine (10), die mit unterschiedlichen Typen von flüssigen Kraftstoffen (33), umfassend insbesondere Ethanol, Methanol und Benzin, betrieben werden kann, und die eine Einrichtung (40) aufweist, welche einen aktuellen Typ des flüssigen Kraftstoffs (33) ermitteln kann, **dadurch gekennzeichnet, dass** mindestens zwei unterschiedliche Wege (46, 48) vorgesehen sind, auf denen der flüssige Kraftstoff (33) in einen Brennraum (14) der Brennkraftmaschine (10) gelangen kann, und dass sie eine Steuer- und Regeleinrichtung (54) umfasst, welche den Einsatz der unterschiedlichen Wege (46, 48) abhängig von dem ermittelten Typ des flüssigen Kraftstoffs (33) steuert bzw. regelt.

2. Brennkraftmaschine (10) nach Anspruch 1, **dadurch gekennzeichnet, dass** ein erster Weg, auf dem der flüssige Kraftstoff (33) in den Brennraum (14) gelangen kann, mindestens einen ersten Injektor (46) umfasst, der den flüssigen Kraftstoff (33) direkt in den Brennraum (14) einspritzt, und dass ein zweiter Weg, auf dem der flüssige Kraftstoff (14) in den Brennraum (14) gelangen kann, mindestens einen zweiten Injektor (48) umfasst, der den flüssigen Kraftstoffin ein Saugrohr (22; 80) einspritzt.

3. Brennkraftmaschine (10) nach Anspruch 2, **dadurch gekennzeichnet, dass** jedem zu einem Brennraum (14) führenden Saugrohr (22) jeweils mindestens ein zweiter Injektor (48) zugeordnet ist.

4. Brennkraftmaschine (10) nach einem der Ansprüche 2 oder 3, **dadurch gekennzeichnet, dass** einem Sammel-Saugrohr (80), welches einer Mehrzahl von Brennräumen (14) zugeordnet ist, mindestens ein zweiter Injektor (48) zugeordnet ist.

5. Brennkraftmaschine (10) nach einem der Ansprüche 2 bis 4, **dadurch gekennzeichnet, dass** der erste Weg (46) vorwiegend für die Einspritzung von wenigstens im Wesentlichen reinem Benzin ausgelegt ist.

6. Brennkraftmaschine (10) nach einem der vorhergehenden Ansprüche, **dadurch gekennzeichnet, dass** die Steuer- und Regeleinrichtung (54) den Einsatz der unterschiedlichen Wege (46, 48) zusätzlich abhängig von mindestens einer weiteren Betriebsgröße der Brennkraftmaschine (10) steuert bzw. regelt.

7. Brennkraftmaschine (10) nach einem der Ansprüche 2 bis 6, **dadurch gekennzeichnet, dass** der zweite Injektor (48) an einen Bereich (38) einer Kraftstoffleitung angeschlossen ist, der stromaufwärts von einer Hochdruckpumpe (42) liegt, und dass der erste Injektor (46) an einen Bereich (44) der Kraftstoffleitung angeschlossen ist, der stromabwärts von der Hochdruckpumpe (42) liegt.

8. Verfahren zum Betreiben einer Brennkraftmaschine (10) mit unterschiedlichen Typen von flüssigen Kraftstoffen (33), insbesondere umfassend Ethanol, Methanol und Benzin, bei dem ein aktueller Typ des flüssigen Kraftstoffs (33) ermittelt wird, **dadurch gekennzeichnet, dass** der flüssige Kraftstoff (33) aufunterschiedlichen Wegen (46, 48) in einen Brennraum (14) der Brennkraftmaschine (10) gelangen kann, und dass der Einsatz der unterschiedlichen Wege (46, 48) von dem ermittelten Typ des flüssigen Kraftstoffs (33) abhängt.

9. Verfahren nach Anspruch 1, **dadurch gekennzeichnet, dass** der Kraftstoff (33) sowohl direkt in den Brennraum (14) als auch in ein Saugrohr (22; 80) eingespritzt werden kann.

## Claims

1. Internal combustion engine (10) which can be operated with different types of liquid fuels (33), comprising in particular ethanol, methanol and gasoline, and which has a device (40) which can determine a present type of the liquid fuel (33), **characterized in that** at least two different paths (46, 48) on which the liquid fuel (33) can pass into a combustion chamber (14) of the internal combustion engine (10) are provided, and **in that** said internal combustion engine comprises an open-loop and closed-loop control device (54) which controls, in open-loop and/or closed-loop fashion, the use of the different paths (46, 48) in a manner dependent on the determined type of the liquid fuel (33).

2. Internal combustion engine (10) according to Claim 1, **characterized in that** a first path on which the liquid fuel (33) can pass into the combustion chamber (14) comprises at least one first injector (46) which injects the liquid fuel (33) directly into the combustion chamber (14), and **in that** a second path on which the liquid fuel (14) can pass into the combustion chamber (14) comprises at least one second injector (48) which injects the liquid fuel into an intake pipe (22; 80).

3. Internal combustion engine (10) according to Claim 2, **characterized in that** each intake pipe (22) which leads to a combustion chamber (14) is assigned in each case at least one second injector (48).

4. Internal combustion engine (10) according to either of Claims 2 and 3, **characterized in that** a manifold intake pipe (80) which is assigned to a multiplicity of combustion chambers (14) is assigned at least one second injector (48).

5. Internal combustion engine (10) according to one of Claims 2 to 4, **characterized in that** the first path (46) is configured predominantly for the injection of at least substantially pure gasoline.

6. Internal combustion engine (10) according to one of the preceding claims, **characterized in that** the open-loop and closed-loop control device (54) controls, in open-loop and/or closed-loop fashion, the use of the different paths (46, 48) in a manner additionally dependent on at least one further operating variable of the internal combustion engine (10).

7. Internal combustion engine (10) according to one of Claims 2 to 6, **characterized in that** the second injector (48) is connected to a region (38) of a fuel line situated upstream of a high-pressure pump (42), and **in that** the first injector (46) is connected to a region (44) of the fuel line situated downstream of the high-pressure pump (42).

8. Method for operating an internal combustion engine (10) with different types of liquid fuels (33), in particular comprising ethanol, methanol and gasoline, in which method a present type of the liquid fuel (33) is determined, **characterized in that** the liquid fuel (33) can pass on different paths (46, 48) into a combustion chamber (14) of the internal combustion engine (10), and **in that** the use of the different paths (46, 48) is dependent on the determined type of the liquid fuel (33).

9. Method according to Claim 1, **characterized in that** the fuel (33) can be injected both directly into the combustion chamber (14) and into an intake pipe (22; 80).

## Revendications

1. Moteur à combustion interne (10), pouvant fonctionner avec différents types de carburants fluides (33), comprenant en particulier de l'éthanol, du méthanol et de l'essence, et qui présente un dispositif (40) qui peut détecter le type effectif de carburant fluide (33), **caractérisé en ce qu'**au moins deux voies différentes (46, 48) sont prévues, par lesquelles le carburant fluide (33) peut parvenir dans une chambre de combustion (14) du moteur à combustion interne (10), et **en ce qu'**il comprend un dispositif de commande et de régulation (54) qui commande ou régule l'utilisation des différentes voies (46, 48) en fonction du type détecté de carburant fluide (33).

2. Moteur à combustion interne (10) selon la revendication 1, **caractérisé en ce qu'**une première voie, par laquelle le carburant fluide (33) peut parvenir dans la chambre de combustion (14), comprend au moins un premier injecteur (46) qui injecte le carburant fluide (33) directement dans la chambre de combustion (14), et **en ce qu'**une deuxième voie, par laquelle le carburant fluide (14) peut parvenir dans la chambre de combustion (14), comprend au moins un deuxième injecteur (48) qui injecte le carburant fluide dans un tube d'admission (22 ; 80).

3. Moteur à combustion interne (10) selon la revendication 2, **caractérisé en ce qu'**à chaque fois au moins un deuxième injecteur (48) est associé à chaque tube d'admission (22) conduisant à une chambre de combustion (14).

4. Moteur à combustion interne (10) selon l'une quelconque des revendications 2 ou 3, **caractérisé en ce qu'**au moins un deuxième injecteur (48) est associé à un tube d'admission collecteur (80) qui est associé à une pluralité de chambres de combustion (14).

5. Moteur à combustion interne (10) selon l'une quelconque des revendications 2 à 4, **caractérisé en ce que** la première voie (46) est conçue essentiellement pour l'injection d'au moins essentiellement de l'essence pure.

6. Moteur à combustion interne (10) selon l'une quelconque des revendications précédentes, **caractérisé en ce que** le dispositif de commande et de régulation (54) commande ou régule en outre l'utilisation des différentes voies (46, 48) en fonction d'au moins une grandeur de fonctionnement supplémentaire du moteur à combustion interne (10).

7. Moteur à combustion interne (10) selon l'une quelconque des revendications 2 à 6, **caractérisé en ce que** le deuxième injecteur (48) est raccordé à une région (38) d'une conduite de carburant qui est située en amont d'une pompe haute pression (42), et **en ce que** le premier injecteur (46) est raccordé à une région (44) de la conduite de carburant qui est située en aval de la pompe haute pression (42).

8. Procédé pour faire fonctionner un moteur à combustion interne (10) avec différents types de carburants fluides (33), en particulier comprenant de l'éthanol, du méthanol et de l'essence, dans lequel un type effectif de carburant fluide (33) est détecté, **caractérisé en ce que** le carburant fluide (33) peut parvenir par différentes voies (46, 48) dans une chambre de combustion (14) du moteur à combustion interne (10) et **en ce que** l'utilisation des différentes voies (46, 48) dépend du type détecté de carburant fluide (33).

9. Procédé selon la revendication 1, **caractérisé en ce que** le carburant (33) peut être injecté à la fois directement dans la chambre de combustion (14) et également dans un tube d'admission (22 ; 80).
